# EUROPÄISCHE PATENTSCHRIFT

(11) **EP 1 818 227 B1**
(45) Veröffentlichungstag und Bekanntmachung des Hinweises auf die Patenterteilung: **29.06.2011**
(21) Anmeldenummer: 06125784.6
(22) Anmeldetag: 11.12.2006
(51) Int. Cl.: B60S 1/34

(54) **Wischerarm, insbesondere für ein Kraftfahrzeug**
Wiper arm, in particular for a vehicle
Bras d'essuie-glace, en particulier pour un véhicule

(30) Priorität: 09.02.2006 DE 102006005862
(43) Veröffentlichungstag der Anmeldung: 15.08.2007
(73) Patentinhaber: ROBERT BOSCH GMBH, 70442 Stuttgart (DE)
(72) Erfinder: Mayer, Stephan, 77855 Achern (DE)

(56) Entgegenhaltungen:
- WO-A1-01/81135
- GB-A- 2 188 537
- GB-A- 2 311 461

## Beschreibung

### Stand der Technik

Die Erfindung betrifft einen Wischerarm, insbesondere für ein Kraftfahrzeug, nach Gattung des unabhängigen Anspruchs.

Es sind schon zahlreiche Wischerarme, beispielsweise aus der DE-A-10228349 bekannt, die ein an einer Wischerwelle befestigbares Befestigungsteil und ein am Befestigungsteil angelenktes Gelenkteil aufweisen, die über ein Verspannungsmittel verbunden sind. Das Verspannungsmittel ist dabei am Gelenkteil und am Befestigungsteil derart befestigt, daß das Gelenkteil gegenüber dem Befestigungsteil verspannt ist. Die Verspannung des Gelenkteils gegenüber dem Befestigungsteil dient dazu, ein am freien Ende des Gelenkteils befestigtes Wischblatt mit einer definierten Kraft gegen eine zu wischende Scheibe des Kraftfahrzeugs zu drücken und ein abheben des Wischblatts durch die Luftströmung, insbesondere bei hohen Fahrgeschwindigkeiten des Kraftfahrzeugs zu verhindern. Da der Wischerarm im Betrieb über die Scheibe pendelt und die Scheibe in der Regel gewölbt ist, ist durch die Verspannung gewährleistet, dass das Wischblatt über den gesamten Pendelbereich hinweg zuverlässig auf die Scheibe gepresst wird.

Hierzu ist es bekannt, in das Befestigungsteil einen Bolzen einzuziehen, an dem eine Feder als Verspannungsmittel eingehakt wird. Dies ist jedoch relativ aufwändig und kostenintensiv. Weiterhin ist bekannt, am Befestigungsteil oder am Gelenkteil eine Lasche vorzusehen, in die eine Feder als Verspannungsmittel eingehakt wird.

Aus dem Dokument GB 2311461 ist ein Wischerarm für ein Kraftfahrzeug bekannt, bei der das Befestigungsteil gegenüber dem Gelenkteil über eine Feder verspannt ist. Die Feder wird durch eine in den Befestigungsbereich eingebrachte Nut an einer Seitenwand des Befestigungsteils befestigt. Dazu wird die Nut in die eine Seitenwand des Befestigungsteils geschnitten. Das Material, welches die Nut bildet, wird nicht von der Seitenwand des Befestigungsteils entfernt, sondern stattdessen zur Verstärkung des Haltebereichs der Sprungfeder umgefaltet, so dass sich ein Befestigungsbereich unmittelbar benachbart zu dem Einsatzbereich der Feder bildet, der eine doppelte Wandstärke aufweist.

### Vorteile der Erfindung

Der erfindungsgemäße Wischerarm mit den Merkmalen des Hauptanspruchs hat den Vorteil, dass ein kostengünstiger und langlebiger Wischerarm dargestellt ist. Dies wird dadurch erzielt, dass zumindest am Befestigungsteil oder am Gelenkteil ein Befestigungsmittel zur Befestigung des Verspannungsmittels vorgesehen ist, das durch ein Verstärkungsmittel verstärkt ist. Darüber hinaus wird auf diese Weise die Geräuschentwicklung an der Anlagestelle des Verspannungsmittels am Gelenkteil oder Befestigungsteil reduziert. Weiterhin wird hierdurch der Verschleiß vermindert und die Fertigung vereinfacht.

Durch die in den abhängigen Ansprüchen aufgeführten Maßnahmen ergeben sich vorteilhafte Weiterbildungen und Verbesserungen der im Hauptanspruch angegebenen Merkmale.

Ist das Befestigungsmittel einstückig mit dem Gelenkteil oder dem Befestigungsteil ausgebildet, so ergibt sich eine besonders einfache Fertigung, da auf ein separates Befestigungsmittel, wie beispielsweise einen separaten Bolzen oder eine separate Brücke, verzichtet werden kann.

In einer besonders einfachen Ausführung ist das Befestigungsmittel als Lasche mit einem Hakelement ausgebildet, das insbesondere eine Öffnung oder eine Kerbe aufweist, wobei das Verstärkungsmittel im Bereich des Verspannungsmittels am Befestigungsmittel angeordnet ist.

Besonders vorteilhaft ist es, wenn das Verstärkungsmittel aus gehärtetem Stahl, insbesondere als gehärtetes Federstahlband, ausgebildet ist.

Eine besonders sichere Befestigung des Verstärkungsmittels am Befestigungsmittel ist dadurch gegeben, dass das Verstärkungsmittel ringförmig um das Befestigungsmittel geschlungen ist.

Das Verstärkungsmittel ist als verriegelter Clip ausgebildet, so dass es in der Fertigung vorteilhafter Weise leicht am Befestigungsmittel anzubringen ist.

Besonders vorteilhaft ist es, wenn das Befestigungsteil und/oder das Gelenkteil im Querschnitt zumindest teilweise im Wesentlichen U-förmig ausgebildet ist und eine Basis sowie zwei Lateralflanken umfasst, wobei die Lasche insbesondere einstückig aus zumindest einer der Lateralflanken herausgebogen ist.

Einfach und kostengünstig kann das Verspannungsmittel als Federelement ausgebildet sein, welches beispielsweise eine einfache Schraubenzugfeder umfasst, die in großen Stückzahlen kostengünstig erhältlich ist.

Besonders langlebig und stabil kann das Befestigungsteil und/oder das Gelenkteil als Blech-Biege-Teil ausgebildet sein.

Eine besonders kostengünstige Ausführung wird vorteilhafter Weise dadurch erzielt, dass das Befestigungsteil und/oder das Gelenkteil aus Kunststoff, insbesondere einstückig, ausgebildet ist.

### Zeichnungen

Ausführungsbeispiele der Erfindung sind in den Zeichnungen dargestellt und in der nachfolgenden Beschreibung näher erläutert. Es zeigen
Figur 1 einen erfindungsgemäßen Wischerarm in einem Längsschnitt,
Figur 2 ein Befestigungsteil eines erfindungsgemäßen Wischerarms in einer perspektivischen Darstellung,
Figur 3 das freie Ende eines Befestigungsteiles einer erfindungsgemäßen Scheibenwischvorrichtung in perspektivischer Detaildarstellung,
Figur 4 eine Lasche aus Figur 3 im Detail,
Figur 5 einen Längsschnitt durch ein freies Ende des Befestigungsteils eines erfindungsgemäßen Wischerarms,
Figur 6 ein freies Ende eines Befestigungsteiles eines erfindungsgemäßen Wischerarms in einer Variation,
Figur 7 einen Längsschnitt durch das freie Ende des Befestigungsteiles aus Figur 6 und
Figur 8 die Lasche aus dem in Figur 6 gezeigten Befestigungsteil in perspektivischer Detaildarstellung.

### Ausführungsformen der Erfindung

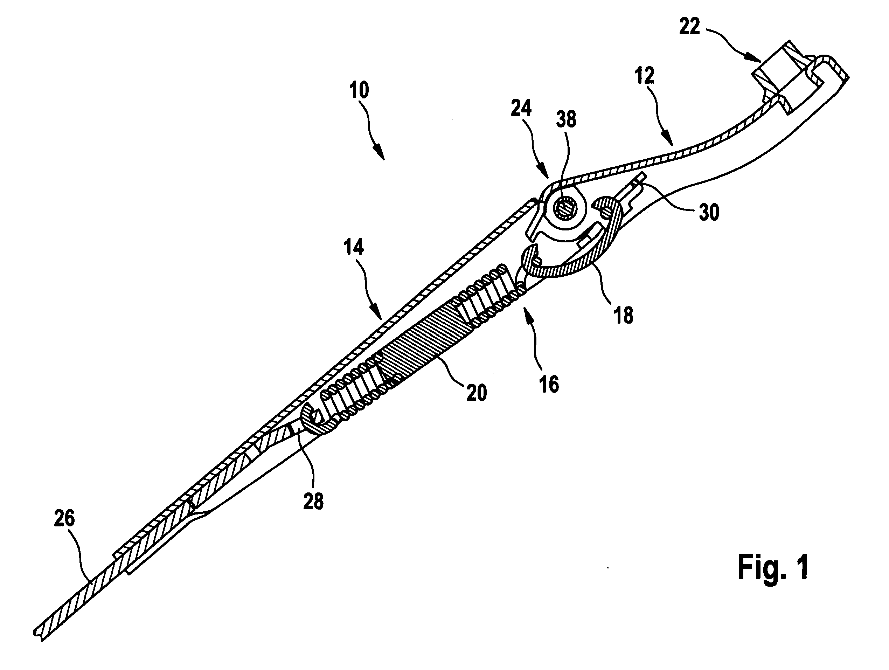

In Figur 1 ist ein erfindungsgemäßer Wischerarm in einer Längsschnittdarstellung gezeigt. Dieser umfasst ein Befestigungsteil 12, ein Gelenkteil 14 sowie ein Verspannungsmittel 16. Das Verspannungsmittel 16 umfasst hierbei einen C-förmigen Bügel 18 sowie eine mit dem Bügel 18 verbundene, insbesondere in diesen eingehakte, Schraubenzugfeder als Federelement 20.

Das Befestigungsteil 12 ist als Blech-Biege-Teil ausgebildet und von im Wesentlichen länglicher Gestalt mit zwei Enden. Am einen Ende ist ein Lagerauge 22 angeordnet, das dazu dient, den Wischerarm 10 an einer der Übersichtlichkeit halber nicht gezeichneten Wischerwelle zu befestigen. Dadurch vermag der Wischerarm 10 im Betrieb eine pendelnde Bewegung auszuführen. An seinem anderen, freien Ende ist das Befestigungsteil 12 drehbeweglich über ein Gelenk 24 mit dem Gelenkteil 14 verbunden. Das Gelenkteil 14 ist von ebenfalls länglicher Gestalt und weist an seinem dem Befestigungsteil 12 abgewandten Ende eine Verlängerung 26 auf, die im Wesentlichen eine vierkantige Stange aus Metall umfasst.

Befestigungsteil 12 und Gelenkteil 14 sind durch das Verspannungsmittel 16 derart verspannt, dass das freie Ende des Gelenkteils 14 durch das Verspannungsmittel 16 in Richtung des Lagerauges 20 beansprucht ist. Damit wirkt die durch das Verspannungsmittel 16 verursachte Kraft am freien Ende des Gelenkteils14 - bei ausgestrecktem Wischerarm 10 - etwa parallel zur Pendelachse der Wischerwelle.

Hierzu ist die Schraubenzugfeder 20 des Verspannungsmittels 16 am Gelenkteil 14 befestigt, insbesondere in eine Haköffnung 28 des Gelenkteil 14 eingehakt. Das andere Ende der Schraubenzugfeder 20 ist in den Bügel 18 eingehakt, dessen der Schraubenzugfeder 18 abgewandtes Ende in eine Lasche als Befestigungsmittel 30 des Befestigungsteils 12 eingehakt ist. Damit ergibt sich eine Verbindung des Befestigungsteils 12 mit dem Gelenkteil 14 über das Verspannungsmittel 16. Die Lasche 30 ist hierbei einstückig mit dem Befestigungsteil 12 ausgebildet und aus diesem herausgebogen.

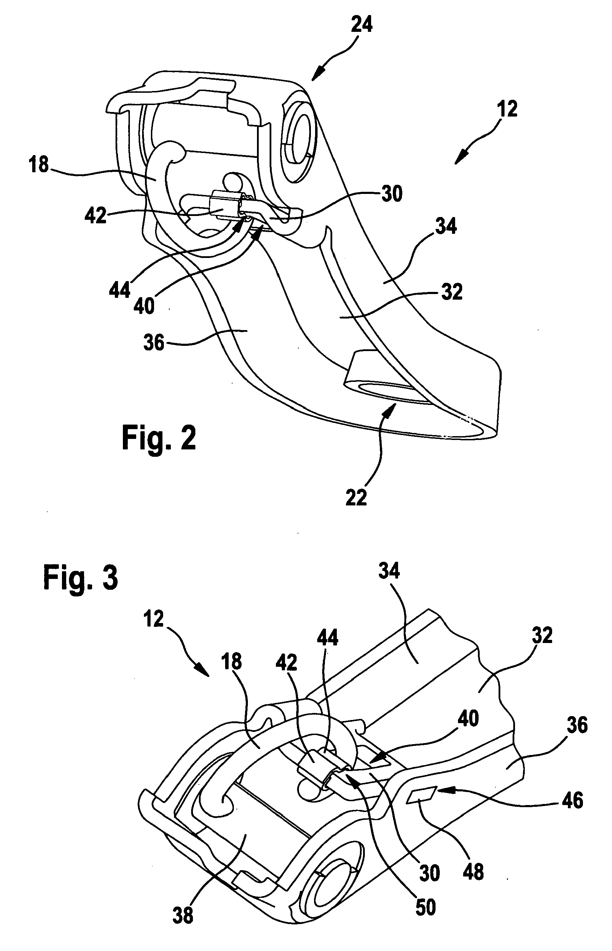

In Figur 2 ist das Befestigungsteil 12 eines erfindungsgemäßen Wischerarmes 10 in einer perspektivischen Darstellung gezeigt.

Das Befestigungsteil 12 ist von im Querschnitt im Wesentlichen U-förmiger Gestalt und weist daher eine Basis 32, eine erste Lateralflanke 34 und eine zweite Lateralflanke 36 auf. Weiterhin ist das Befestigungsteil 12 von im Wesentlichen länglicher Gestalt und weist an dem einen Ende das Lagerauge 22 und an seinem anderen Ende das Gelenk 24 auf. Hierzu ist zwischen der ersten Lateralflanke 34 und der zweiten Lateralflanke 36 ein Gelenkbolzen 38 eingesetzt, der mit dem Gelenkteil 14 (Figur 1) zusammenwirkt. In einer Variation der Erfindung kann der Gelenkbolzen 38 auch aus zwei kurzen Bolzen bestehen, die aus jeweils einer der Lateralflanken 34, 36 herausgeprägt sind. Im Bereich des Gelenks 24, zwischen dem Gelenk 24 und dem Lagerauge 22, ist, ausgehend von der der Basis abgewandten, freien Seite der ersten Lateralflanke 34, das Befestigungsmittel 30 als Lasche herausgebildet, die sich etwa parallel zur Basis 32 erstreckt. Die Lasche 30 ist hierbei an der zweiten Lateralflanke 36 zusätzlich befestigt, jedoch kann auf diese zusätzliche Befestigung auch verzichtet werden.

Die Lasche 30 weist darüber hinaus eine Bügelöffnung als Hakelement 40 auf, in die der C-förmige Bügel 18 eingehakt ist. Im Berührungsbereich zwischen Bügel 18 und Lasche als Befestigungsmittel 30 ist ein gehärtetes Stahlband als Verstärkungsmittel 42 gezogen, sodass der Bügel 18 des Verspannungsmittels 16 auf dem Verstärkungsmittel 42 aufliegt. Damit kommt der Bügel 18 des Verspannungsmittels 16 mit der Lasche 30 selbst nicht in Berührung. Das Verstärkungsmittel 42 ist hierbei klammerartig ausgebildet und umschmiegt die Lasche 30 in dem Bereich zwischen Bügelöffnung 40 und der dem freien Ende zugewandten Seite des Befestigungsteils 12 der Lasche 30. Zur besseren Fixierung weist das Verstärkungsmittel 42 eine Eindrückung 44 auf, sodass das Verstärkungsmittel 42 an der Lasche 30 fest gehaltert ist.

In Figur 3 ist das freie Ende des Befestigungsteils 12 in einer perspektivischen Darstellung im Detail gezeigt. Das Befestigungsteil 12 weist eine im Querschnitt umgekehrt U-förmige Gestalt auf. Im Querschnitt ist an dem freien, der Basis 32 abgewandten Ende der ersten Lateralflanke 34 ist, einstückig mit derselben, die Lasche 30 im Winkel von etwa 90 Grad herausgebogen, die sich brückenartig in Richtung der zweiten Lateralflanke 36 erstreckt. Die zweite Lateralflanke 36 weist eine Aufnahmeöffnung 46 auf, in die ein Fortsatz 48 der Brücke 30 eingesteckt ist, sodass die Brücke 30 zwischen der ersten Lateralflanke 34 und der zweiten Lateralflanke 36 fest gehaltert ist. In einer Variation der Erfindung kann die Lasche 30 auch als separates Teil ausgebildet sein, welches an den beiden Lateralflanken 34, 36 oder an der Basis 32 befestigt ist. In einer weiteren Variation der Erfindung kann die Lasche 30 auch noch weiter in den Innenraum des U-förmigen Befestigungsteils 12 hineinragen, insbesondere so, daß sich das Verspannungsmittel 16 vollständig innerhalb des Befestigungsteils 12 befindet.

In der Lasche 30 ist die Bügelöffnung 40 von im Wesentlichen rechteckiger Gestalt angeordnet. Dadurch ergibt sich eine Befestigungsbrücke 50, um die das Verstärkungsmittel 42 geschlungen ist.

In einer Variation der Erfindung kann auf die Bügelöffnung 40 auch verzichtet werden und beispielsweise nur eine entsprechende Kerbe als Hakelement in der Lasche 30 vorgesehen sein. Das Verstärkungsmittel 42 kann hierbei auch die gesamte Breite der Lasche 30 umgreifen.

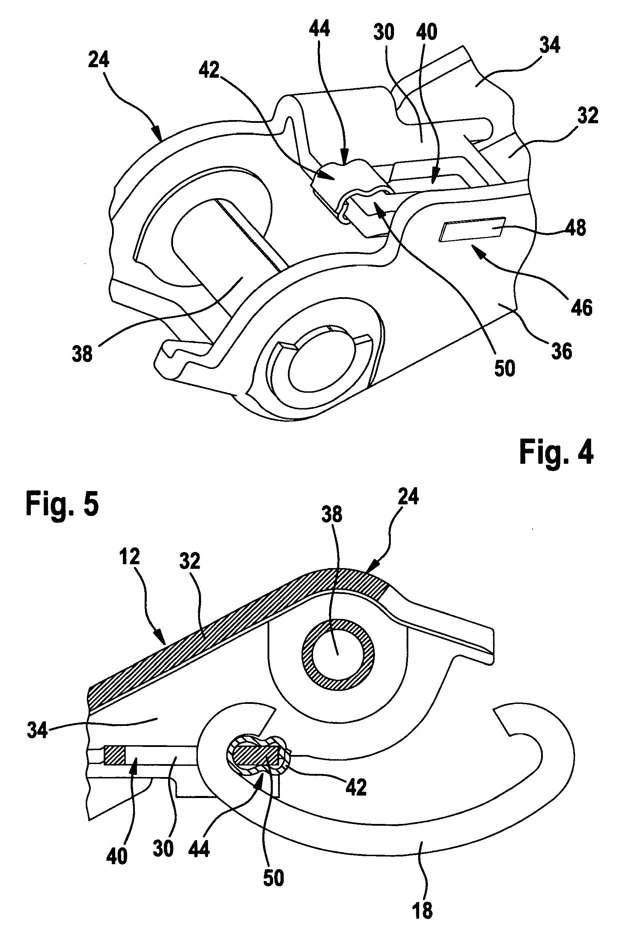

In Figur 4 ist das Befestigungsteil 12 mit der Lasche 30 nochmals im Detail gezeigt. Die Lasche 30 erstreckt sich von der ersten Lateralflanke 34 aus in Richtung der zweiten Lateralflanke 36. Diese weist eine Aufnahmeöffnung 46 auf, in die der Fortsatz 48 der Lasche 30 eingesetzt ist. In der Lasche 30 ist die im Wesentlichen rechteckige Bügelöffnung 40 als Hakelement angeordnet, sodass zwischen dem gelenkseitigen Abschluss der Lasche 30 und der Bügelöffnung 40 die Befestigungsbrücke 50 entsteht. Um diese Befestigungsbrücke 50 herum ist das Verstärkungsmittel 42 geschlungen, das aus einem gehärteten Federstahlband besteht. Zur Fixierung weist das Verstärkungsmittel 42 eine Eindrückung 44 auf, die sich von zwei gegenüberliegenden Seiten aus auf die flächige Seite der Lasche 30 hin erstreckt, sodass das Verstärkungsmittel 42 spielarm an der Lasche 30 fixiert ist.

In Figur 5 ist das gelenkteilseitige Ende des Befestigungsteils 12 eines erfindungsgemäßen Wischerarms 10 in einer Längsschnittdarstellung gezeigt. Das Befestigungsteil 12 ist im Wesentlichen einstückig als Blech-Biege-Teil hergestellt und umfasst die Basis 32, die Lateralflanken 34, 36 (Figur 4) sowie die Lasche 30. Die Lasche 30 weist die Bügelöffnung 40 auf, in die der Bügel 18 des Verspannungsmittels 16 eingehakt ist. Durch die Bügelöffnung 40 ist in der Lasche 30 die Befestigungsbrücke 50 entstanden, um die herum das Verstärkungsmittel 42 angeordnet ist. Zur Fixierung in der zur Ebene der Lasche 30 senkrechten Richtung weist das Verstärkungsmittel 42 die Eindrückung 44 auf. Im Bereich des Bügels 18 folgt das Verstärkungsmittel 42 der Kontur des Bügels 18 im Berührungsbereich.

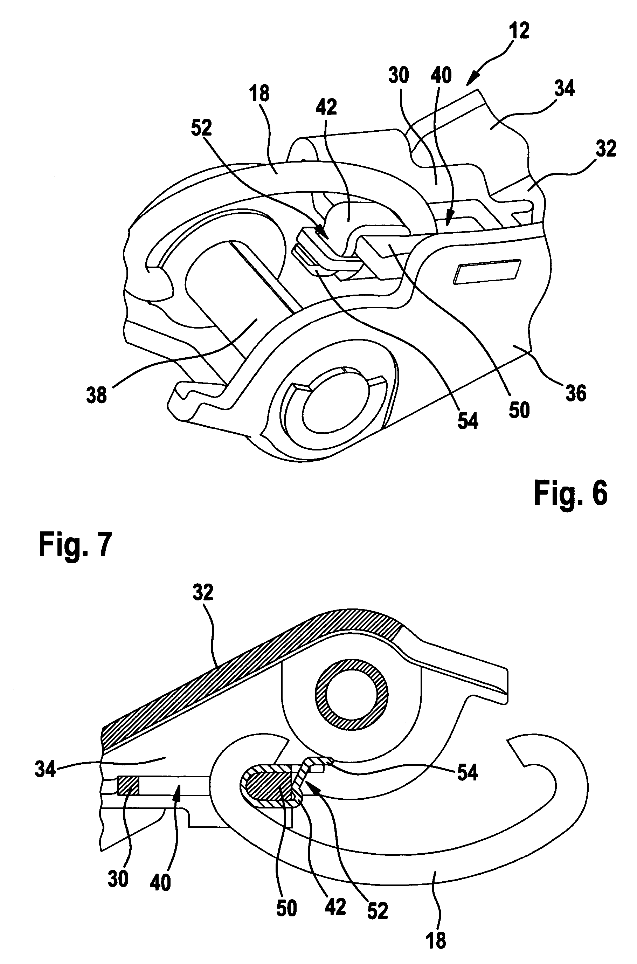

In Figur 6 ist das gelenkteilseitige Ende des Befestigungsteils 12 eines erfindungsgemäßen Wischerarms in einer Variation dargestellt. Aufgrund der Ähnlichkeit sind gleiche Gegenstände mit den gleichen Bezugsziffern wie in Figur 4 versehen. Die Lasche 30 als Befestigungsmittel erstreckt sich, ausgehend von der freien, basisabgewandten Kante der Lateralflanke 34 aus, in Richtung der zweiten Lateralflanke 36. Durch die Bügelöffnung 40 ist das Verstärkungsmittel 42 geführt, welches sich ebenso um die Befestigungsbrücke 50 schlingt. Das Verstärkungsmittel 42 ist hierbei aus gehärtetem Federstahl ausgebildet und von im Wesentlichen länglicher Gestalt. An einem Ende weist es eine Fädelöffnung 52 auf, durch die das andere, der Fädelöffnung 52 abgewandte Ende des Verstärkungsmittels 42 durchgefädelt ist. In der dadurch entstehenden Schlaufe ist die Befestigungsbrücke 50 angeordnet. Zur Fixierung ist an diesem der Fädelöffnung 52 abgewandten Ende eine Arretierungsbiegung 54 vorgesehen, sodass dieses Ende des Verstärkungsmittels 42 aus der Fädelöffnung 52 nicht heraus gleiten kann. Natürlich kann hier auch eine entsprechende Kerbe am der Fädelöffnung 52 abgewandten Ende des Verstärkungsmittels 42 vorgesehen sein, die mit der Fädelöffnung 52 zusammenwirkt. Grundsätzlich können hier auch andere, an sich bekannte, Verschlußmechanismen vorgesehen sein.

Figur 7 zeigt dieses in einem Längsschnitt. Die Lasche 30 erstreckt sich von der ersten Lateralflanke 34 ausgehend in Richtung der zweiten Lateralflanke 36 und weist die Bügelöffnung 40 auf. Durch die Bügelöffnung 40 ist zwischen der gelenkteilseitigen Begrenzung der Lasche 30 und der Bügelöffnung 40 die Befestigungsbrücke 50 entstanden, um die das Verstärkungsmittel 42 herum geschlungen ist. In dem Bereich, in dem das Verstärkungsmittel 42 den Bügel 18 berührt, folgt das Verstärkungsmittel 42 der Kontur des Bügels 18. Das Verstärkungsmittel 42 ist im Grundzustand von im Wesentlichen länglicher Gestalt und weist an einem Ende die Fädelöffnung 52 auf, durch die das andere Ende des Verstärkungselements 42 durchgefädelt ist. Zur Arretierung weist dieses andere Ende des Verstärkungsmittels 42 die Arretierungsbiegung 54 auf, sodass ein Herausgleiten aus der Fädelöffnung 52 verhindert und eine verriegelte Clip-Verbindung realisiert ist. Hierbei kann der Clip auch mit einer Vorspannung versehen werden.

In einer Variation der Erfindung kann das Verstärkungselement 42 auch aus anderen harten und zähen Materialien, beispielsweise aus einem geeigneten Kunststoff oder aus einer geeigneten Keramik bzw. Karbonfaser, hergestellt sein. In einer weiteren Variation kann auf den Bügel 18 verzichtet werden und dieser einstückig mit der Schraubenzugfeder 20 oder einem anderen Verspannungsmittel 16 ausgebildet sein. Weiterhin ist es möglich, auf die Lasche 30 zu verzichten und ein separates Befestigungsmittel 30 zwischen den Lateralflanken 34, 36 oder an anderer geeigneter Stelle anzubringen. In einer weiteren Variation der Erfindung kann das Verstärkungselement 42 auch einstückig mit dem Befestigungsmittel 30 ausgebildet sein oder in einem stoffschlüssigen Verfahren am Befestigungsmittel 30 befestigt sein. So kann das Verstärkungsmittel 42 beispielsweise auch durch einen gehärteten und/oder beschichteten Bereich an der Befestigungsbrücke 50 realisiert sein. Hierbei kommt beispielsweise eine Schicht aus PTFE in Betracht. Darüber hinaus sind auch andere Möglichkeiten der Verriegelung des Verstärkungsmittels 42 als die in Figur 6 gezeigte möglich. In einer weiteren Variation kann auch auf eine Verriegelung verzichtet werden und das Verstärkungsmittel 42 auf die Lasche 30 als Befestigungsmittel aufgeklebt oder aufgeschweißt oder in einem anderen Verfahren befestigt werden. Weiterhin kann das Verstärkungsmittel 42 auch durch eine Lasche 30 gebildet sein, die zumindest im Berührungsbereich zum Verspannungsmittel 16 besonders bearbeitet, insbesondere gehärtet ist.

## Patentansprüche

1. Wischerarm (10), insbesondere für ein Kraftfahrzeug, mit einem an einer Wischerwelle befestigbaren Befestigungsteil (12) und einem am Befestigungsteil (12) angelenkten Gelenkteil (14) und einem Verspannungsmittel (16), dass an dem Gelenkteil (14) und an dem Befestigungsteil (12) befestigt ist, so dass das Gelenkteil (14) gegenüber dem Befestigungsteil (12) verspannt ist, wobei zumindest am Befestigungsteil (12) oder am Gelenkteil (14) ein Befestigungsmittel (30) zur Befestigung des Verspannungsmittels (16) vorgesehen ist, das durch ein Verstärkungsmittel (42) verstärkt ist, **dadurch gekennzeichnet, dass** das Verstärkungsmittel (42) insbesondere ringförmig, um das Befestigungsmittel (30) geschlungen ist, wobei das Verstärkungsmittel (42) als verriegelter, insbesondere vorgespannter, Clip ausgebildet ist.

2. Wischerarm (10) nach Anspruch 1, **dadurch gekennzeichnet, dass** das Befestigungsmittel (30) einstückig mit dem Gelenkteil (14) oder dem Befestigungsteil (12) ausgebildet ist.

3. Wischerarm (10) nach mindestens einem der vorhergehenden Ansprüche, **dadurch gekennzeichnet, dass** das Befestigungsmittel (30) als Lasche (30) mit einem Hakelement (40) insbesondere einer Öffnung oder einer Kerbe ausgebildet ist und das Verstärkungsmittel (42) im Bereich des Verspannungsmittels ausgebildet ist und das Verstärkungsmittel (42) im Bereich des Verspannungsmittels (16) angeordnet ist.

4. Wischerarm (10) nach mindestens einem der vorhergehenden Ansprüche, **dadurch gekennzeichnet, dass** das Verstärkungsmittel (42) aus gehärtetem Stahl, insbesondere als gehärtetes Federstahlband ausgebildet ist.

5. Wischerarm (10) nach Anspruch 1, 3 oder 4, **dadurch gekennzeichnet, dass** das Befestigungsteil (12) und/oder das Gelenkteil (14) im Querschnitt zumindest teilweise im Wesentlichen U-förmig ausgebildet ist und eine Basis (32) und zwei Lateralflanken (34, 36) umfasst und die Lasche (30), insbesondere einstückig, aus zumindest einer der Lateralflanken (34, 36) herausgebogen ist.

6. Wischerarm (10) nach mindestens einem der vorhergehenden Ansprüche, **dadurch gekennzeichnet, dass** das Verspannungsmittel (16) Federelemente (20) umfasst.

7. Wischerarm (10) nach mindestens einem der vorhergehenden Ansprüche, **dadurch gekennzeichnet, dass** das Befestigungsteil (12) und/oder das Gelenkteil (14) als Blech-Biege-Teile ausgebildet ist.

8. Wischerarm (10) nach mindestens einem der vorhergehenden Ansprüche 1 bis 6, **dadurch gekennzeichnet, dass** das Befestigungsteil (12) und/oder das Gelenkteil (14) aus Kunststoff, insbesondere einstückig ausgebildet ist.

## Claims

1. Wiper arm (10) in particular for a motor vehicle, with a fastening part (12) which can be fastened to a wiper shaft, and an articulated part (14) which is coupled to the fastening part (12), and a bracing means (16) which is fastened to the articulated part (14) and to the fastening means (12) such that the articulated part (14) is braced in relation to the fastening part (12), wherein a fastening means (30) for fastening the bracing means (16) is provided at least on the fastening part (12) or on the articulated part (14), said fastening means being reinforced by a reinforcing means (42), **characterized in that** the reinforcing means (42) is coiled, in particularly annularly, around the fastening means (30), the reinforcing means (42) being designed as a locked, in particular prestressed, clip.

2. Wiper arm (10) according to Claim 1, **characterized in that** the fastening means (30) is formed integrally with the articulated part (14) or the fastening part (12).

3. Wiper arm (10) according to at least one of the preceding claims, **characterized in that** the fastening means (30) is designed as a bracket (30) with a hook element (40), in particular an opening or a notch, and the reinforcing means (42) is formed in the region of the bracing means, and the reinforcing means (42) is arranged in the region of the bracing means (16).

4. Wiper arm (10) according to at least one of the preceding claims, **characterized in that** the reinforcing means (42) is formed from hardened steel, in particular in the form of a hardened spring steel strip.

5. Wiper arm (10) according to Claim 1, 3 or 4, **characterized in that** the fastening part (12) and/or the articulated part (14) are/is at least partially of substantially U-shaped design in cross section and comprise(s) a base (32) and two lateral flanks (34, 36), and the bracket (30) is bent, in particular integrally, out of at least one of the lateral flanks (34, 36).

6. Wiper arm (10) according to at least one of the preceding claims, **characterized in that** the bracing means (16) comprises spring elements (20).

7. Wiper arm (10) according to at least one of the preceding claims, **characterized in that** the fastening part (12) and/or the articulated part (14) are/is designed as sheet-metal bent parts.

8. Wiper arm (10) according to at least one of the preceding Claims 1 to 6, **characterized in that** the fastening part (12) and/or the articulated part (14) are/is formed, in particular integrally, from plastic.

## Revendications

1. Bras d'essuie-glace (10), en particulier pour un véhicule automobile, comprenant une partie de fixation (12) pouvant être fixée sur un arbre d'essuie-glace et une partie d'articulation (14) articulée à la partie de fixation (12) et un moyen de serrage (16), qui est fixé sur la partie d'articulation (14) et la partie de fixation (12), de sorte que la partie d'articulation (14) soit serrée par rapport à la partie de fixation (12), un moyen de fixation (30) pour la fixation du moyen de serrage (16) étant prévu au moins sur la partie de fixation (12) ou sur la partie d'articulation (14), lequel est renforcé par un moyen de renforcement (42), **caractérisé en ce que** le moyen de renforcement (42) est enroulé notamment sous forme annulaire autour du moyen de fixation (30), le moyen de renforcement (42) étant réalisé sous forme de pince verrouillée, notamment précontrainte.

2. Bras d'essuie-glace (10) selon la revendication 1, **caractérisé en ce que** le moyen de fixation (30) est réalisé d'une seule pièce avec la partie d'articulation (14) ou la partie de fixation (12).

3. Bras d'essuie-glace (10) selon au moins l'une quelconque des revendications précédentes, **caractérisé en ce que** le moyen de fixation (30) est réalisé sous forme de patte (30) avec un élément de crochet (40), en particulier une ouverture ou une entaille, et le moyen de renforcement (42) est réalisé dans la région du moyen de serrage et le moyen de renforcement (42) est disposé dans la région du moyen de serrage (16).

4. Bras d'essuie-glace (10) selon au moins l'une quelconque des revendications précédentes, **caractérisé en ce que** le moyen de renforcement (42) est réalisé en acier trempé, notamment sous forme de bande d'acier à ressort trempée.

5. Bras d'essuie-glace (10) selon la revendication 1, 3 ou 4, **caractérisé en ce que** la partie de fixation (12) et/ou la partie d'articulation (14) est réalisée en section transversale au moins en partie sensiblement en forme de U et comprend une base (32) et deux flancs latéraux (34, 36) et la patte (30) est recourbée notamment d'une seule pièce à partir d'au moins l'un des flancs latéraux (34, 36).

6. Bras d'essuie-glace (10) selon au moins l'une quelconque des revendications précédentes, **caractérisé en ce que** le moyen de serrage (16) comprend des éléments de ressort (20).

7. Bras d'essuie-glace (10) selon au moins l'une quelconque des revendications précédentes, **caractérisé en ce que** la partie de fixation (12) et/ou la partie d'articulation (14) sont réalisées sous forme de pièces cintrées en tôle.

8. Bras d'essuie-glace (10) selon au moins l'une quelconque des revendications précédentes 1 à 6, **caractérisé en ce que** la partie de fixation (12) et/ou la partie d'articulation (14) sont réalisées en plastique, notamment d'une seule pièce.
